# EUROPEAN PATENT SPECIFICATION

(11) **EP 1 591 502 B1**
(45) Date of publication and mention of the grant of the patent: **16.10.2013**
(21) Application number: 05008131.4
(22) Date of filing: 14.04.2005
(51) Int. Cl.: C09D 175/14, C09D 175/16, C08G 18/48, C08G 18/42

(54) **UV-Curable coating composition**
UV-härtbare Beschichtungszusammensetzung
Composition de revêtement durcissable par UV

(30) Priority: 27.04.2004 US 832510
(43) Date of publication of application: 02.11.2005
(73) Proprietor: Bayer MaterialScience LLC, Pittsburgh, PA 15205 (US)
(72) Inventor: Dvorchak, Michael J., Monroeville, PA 15146 (US); Galeza, Larry, Mercer, PA 16137 (US); Wade, Robert A., Carnegie, PA 15106 (US); Bridges, Clifford M., Pittsburgh, PA 15208 (US); Subramanian, Ramesh, Coraopolis, PA 15108 (US)
(74) Representative: Klimiuk, Meike

(56) References cited:
- WO-A-01/02455
- WO-A-02/12407
- US-A1- 2003 232 955
- US-B1- 6 579 932

## Description

### BACKGROUND OF THE INVENTION

UV curable coatings are one of the fastest growing sectors in the coatings industry. In recent years, UV technology has made inroads into a number of market segments like fiber optics, optical- and pressure sensitive adhesives, automotive applications like UV cured topcoats, and UV curable powder coatings. The driving force of this development is mostly the quest for an increase in productivity of the coating and curing process. In automotive refinish applications where minor repairs need to be performed swiftly and at ambient temperature, UV technology promises to significantly increase the throughput of cars in a body shop. The development of refinish applications breaks new ground in UV technology. Safety concerns associated with the use of UV lamps in body shops as well as economic constraints will likely preclude the use of high intensity light sources. Relatively inexpensive low intensity lamps that emit only in the UV-A region of the electromagnetic spectrum are taking their place thus posing new challenges to resin developers and formulators.

UV curable coating compositions are known in the art. U.S. Patent 5,684,081 describes a radiation-curable, aqueous dispersion, although the reference is silent as to the wavelength of the radiation to be used. Also known are compositions that are curable using UV radiation having a very low UV-B content and substantially no UV-C content (see, e.g., U.S. Patent application publication 2003/0059555 and U.S. Patent 6,538,044). The compositions described in the '044 patent are fragranced lacquer coatings that are non-aqueous and are not based on urethane chemistry. The '555 publication describes solvent-based compositions useful as primers. The compositions therein are non-aqueous and require wiping of the coating with an organic solvent following exposure to UV radiation and before sanding of the coated part.

U.S. Patent 6,559,225 describes an aqueous polyurethane dispersion for use in lacquers and coatings. The '225 patent does not describe UV curing, and hints that the dispersions described therein can be combined with radiation-curable binders (column 5, lines 17-20). Finally, U.S. Patent 6,579,932 describes an aqueous coating composition which is a mixture of a polyurethane/acrylate hybrid dispersion and a polyurethane resin with oxidative drying groups. The '932 patent does not describe UV curing.

It has now been found that mixtures of the aqueous dispersions described in the '225 patent and the '081 patent are curable with radiation having a wavelength of at least 300 nm and preferably from 320 nm to 450 nm.

### DESCRIPTION OF THE INVENTION

More particularly, the present invention is directed to a composition curable by radiation having a wavelength of 300nm or more, and preferably radiation having a wavelength of from 320nm to 450nm. The compositions of the invention do not require a solvent wipe and can be sanded immediately after exposure to the radiation. Furthermore, compositions of the invention can be used as primers and top coatings on a variety of different substrates, such as metal, wood, cork, plastic, leather, textiles, felt, glass, paper, mineral or composite substrates.

The compositions of the present invention comprise:
A) from 1 to 99% by weight, preferably from 10 to 90% by weight, and most preferably from 25 to 75% by weight, of an aqueous polyurethane dispersion having a solids content of from 20 to 50% by weight and being prepared from components comprising:
   a) from 5 to 50% by weight of a polyester prepared from
      ai) from 30 to 85% by weight of castor oil fatty acid,
      aii) from 10 to 60% by weight of one or more carboxylic acids having from 8 to 30 carbon atoms and from 0 to 4 C=C double bonds and
      aiii) from 3 to 20% by weight of one or more alcohols with an average functionality of from 2.5 to 3.5,
      wherein the percentages of components A)ai) through A)aiii) total 100%,
   b) from 5 to 60% of one or more polyisocyanates,
   c) from 0.5 to 40% by weight of one or more non-hydrophilic polymeric polyols having number average molecular weights of 500 to 6000,
   d) from 0 to 10% by weight of a monoalcohol and or a monoamine,
   e) from 0.5 to 15% by weight of a material having a number average molecular weight of below 500 and being selected from the group consisting of polyols, aminopolyols and polyamines, and
   f) from 0 to 10% by weight of an OH- and/or an NH-functional, nonionic, hydrophilic polyoxyalkylene ether, having a number average molecular weight of from 250 to 3000,
   wherein the percentages of components A)a) through A)f) total 100%,
B) from 1 to 99% by weight, preferably from 10 to 90% by weight, and most preferably from 25 to 75% by weight, of an aqueous polyester acrylate/urethane dispersion having a solids content of from 20 to 60% by weight and prepared by reaction of
   a) from 40 to 90% (and preferably from 50 to 80%) by weight of one or more acrylate polymers containing hydroxyl groups and having an OH number of from 40 to 120,
   b) from 0.1 to 20% (and preferably from 2 to 15%) by weight of one or more compounds containing i) one and/or two functional groups compounds reactive towards isocyanate groups and ii) groups which are cationic and/or anionic and/or have a dispersant action due to ether groups content,
   c) from 10 to 50% (and preferably from 15 to 40%) by weight of one or more di- and/or polyisocyanates,
   d) from 0 to 30% (and preferably from 0 to 20%) by weight of a di-and/or polyol having a number average molecular weight of up to 5000, an OH functionality of from 1.8 to 2.2, containing no groups which are cationic or anionic, containing an insufficient amount of ether groups to have a dispersant action and containing no ethylenically unsaturated groups, and
   e) from 0.1 to 10% (and preferably from 0.5 to 7%) by weight of one or more di-
      and/or polyamines having a number average
      molecular weight of from 31 to 700, wherein the percents by weight are based on the total amount of components B)a) through B)e) and total 100%,
C) from 0.1 to 10% by weight, preferably from 0.5 to 6% by weight, and most preferably from to 4% by weight, of one or more photoinitiators, wherein the % by weight of component C) is based on the combined weight of components A) and B) and wherein the percentages of components A) and B) total 100%, and
D) from 20 to 60% by weight of water or a mixture of water and solvent, wherein the % by weight of component D) is based on the total combined solids content of components A) and B).

The aqueous polyurethane dispersion A) and its method of manufacture are described in U.S. Patent 6,559,225. One commercially available dispersion described in the '225 patent is Bayhydrol TP LS 2342, available from Bayer Polymers LLC. The aqueous dispersion B) and its method of manufacture are described in U.S. Patent 5,684,081, the disclosure of which is hereby incorporated by reference. One commercially available dispersion described in the '081 patent is Bayhydrol UV VP LS 2282, available from Bayer Polymers LLC.

### Component A)

The composition of the present invention comprises from 1 to 99% by weight, preferably from 10 to 90% by weight, and most preferably from about 25 to about 75% by weight, of an aqueous polyurethane dispersion A) prepared from components comprising:
a) from 5 to 50% by weight of a specified polyester,
b) from 5 to 60% of one or more di - and/or polyisocyanates,
c) from 0.5 to 40% by weight of one or more non-hydrophilic polymeric polyols having number average molecular weights of 500 to 6000,
d) from 0 to 10% by weight of a monoalcohol and or a monoamine,
e) from 0.5 to 15% by weight of a material having a number average molecular weight of below 500 and being selected from the group consisting of polyols, an aminopolyols and polyamines, and
f) from 0 to 10% by weight of an OH- and/or an NH-functional, nonionic, hydrophilic polyoxyalkylene ether, having a number average molecular weight of from 250 to 3000,
wherein the percentage of components A)a) through A)f) total 100%.

The polyester (A)a) is prepared by reacting A)ai) from 30 to 85% (and preferably from 50 to 70%) by weight of castor oil fatty acid, A)aii) from 10 to 60% ( and preferably from 25 to 35%) by weight of one or more carboxylic acids having 8 to 30 C atoms and 0 to 4 C=C double bonds and A)aiii) from about 3 to about 20% (and preferably from 5 to 15%) by weight of one or more alcohols with an average functionality of from 2.5 to 3.5. The percentages are based on the total amount of components A)ai) through A)aiii) and add up to 100%.

The carboxylic acids (A)aii)) are preferably aliphatic and cycloaliphatic monocarboxylic acids such as for example 2-ethylhexanoic acid, lauric acid, stearic acid, oleic acid, linoleic acid or linolenic acid. Particularly preferred are fatty acid mixtures as may be obtained from natural vegetable or animal oils, such as for example soya oil, peanut oil, tall oil, linseed oil, wood oil, sunflower oil or castor oil (optionally with further chemical and/or physical modification).

Alcohols (A)aiii)) will generally have number average molecular weights of from 62 to 1000. Specifically useful alcohols include difunctional alcohols such as ethylene glycol, diethylene glycol, 1,4-butanediol, neopentyl glycol, 1,2-propanediol, 1,3-propanediol and 2-ethylhexanediol; trifunctional alcohols such as glycerol and trimethylolpropane; and higher functional alcohols such as pentaerythritol. The presently preferred alcohol (A)aiii)) is glycerol. The average functionality (i.e., the arithmetical average based on molar concentration of alcohols (A)aiii)) is between 2.5 and 3.5, and is preferably 3.0.

The component A)b) may include substantially any organic di- and/or polyisocyanate. Aromatic, araliphatic, aliphatic or cycloaliphatic di - and/or polyisocyanates and mixtures of such isocyanates may be used. Preferred are diisocyanates of the formula R¹(NCO)₂, wherein R¹ represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms. Specific examples of suitable isocyanates include tetramethylene diisocyanate, hexamethylene diisocyanate, 2,3,3-trimethylhexamethylene diisocyanate, 1,4-cyclohexylene diisocyanate, 4,4'-dicyclohexylmethane diisocyanate, 4,4'-dicyclohexyl diisocyanate, 1-diisocyanato-3,3,5-trimethyl-5-isocyanatomethylcyclohexane (isophorone diisocyanate), 1,4-phenylene diisocyanate, 2,6-tolylene diisocyanate, 2,4-tolylene diisocyanate, 1,5-naphthylene diisocyanate, 2,4- or 4,4'-diphenylmethane diisocyanate, α,α,α',α'-tetramethyl-*m*- or -*p*-xylylene diisocyanate, and triphenylmethane 4,4',4"-triisocyanate as well as mixtures thereof.

Polyisocyanates having isocyanurate, biuret, allophanate, uretidione or carbodiimide groups are also useful as the isocyanate component. Such polyisocyanates may have isocyanate functionalities of 3 or more. Such isocyanates are prepared by the trimerization or oligomerization of diisocyanates or by the reaction of diisocyanates with polyfunctional compounds containing hydroxyl or amine groups. Preferred is the isocyanurate of hexamethylene diisocyanate. Further suitable compounds are blocked polyisocyanates, such as 1,3,5-tris-[6-(1-methylpropylidene aminoxy carbonylamino)hexyl]-2,4,6-trioxo-hexahydro-1,3,5-triazine.

Hexamethylene diisocyanate, 4,4'-dicyclohexylmethane diisocyanate and isophorone diisocyanate and the mixtures thereof are the presently preferred isocyanates.

The non-hydrophilic polymeric polyols (A)c)) are generally known for the production of polyurethanes. They have OH functionalities of at least 1.8 up to 4. These include, for example polyesters, polyethers, polycarbonates, polyester carbonates, polyacetals, polyolefins, polyacrylates and polysiloxanes. The polyols preferably have number average molecular weights of from 800 to 2500 and OH functionalities of from 1.9 to 3. Polyethers are particularly preferably used.

In addition to the use of non-hydrophilic polyol components, monoalcohols or monoamines (A)d)) may also be used. Such monofunctional compounds typically have number average molecular weights of from 31 to 1000. Preferred compounds (A)d)) are aliphatic monoalcohols or monoamines having from 1 to 18 carbon atoms, such as ethanol, n-butanol, ethylene glycol monobutyl ether, 2-ethyl-hexanol, 1-octanol, 1-dodecanol or 1-hexadecanol. Also useful are di-N-alkylamines (where the alkyl can be aliphatic or cycloaliphatic) and di-N-arylamines.

The polyols, aminopolyols or polyamines (A)e)) having number average molecular weights of below 500, are also generally known in the polyurethane art. Examples include ethylene glycol, 1,4-butanediol, cyclohexanedimethanol, trimethylolpropane, glycerol, hydrazine, ethylene diamine, 1,4-diaminobutane, isophoronediamine, 4,4-diaminodicyclohexylmethane and N-alkyl or aryl alkanolamines. Low molecular weight compounds, which contain anionic groups or are capable of forming ionic groups are also useful. Examples include dimethylolpropionic acid; hydroxypivalic acid; reaction products of (meth)acrylic acid and polyamines (*c.f*., for example German patent 19,750,186); or polyol components containing sulfonate groups, such as for example the propoxylated addition product of sodium hydrogen sulfite and 2-butenediol or the polyesters synthesized from salts of sulfoisophthalic acid as described in WO98/06768. OH-functional compounds which contain cationic groups or units convertible into cationic groups, such as for example N-methyldiethanolamine, are also suitable.

OH- and/or NH-functional, nonionic, hydrophilic polyoxyalkylene ethers (A)f)) may also be used in preparing component A). Typically, these polyethers will have number average molecular weights of from 250 to 3000 and will contain at least one hydroxy or amino group and will contain ethylene oxide units. Such polyethers are known in the polyurethane art and are generally prepared by reacting a starter compound with ethylene oxide or a mixture of ethylene oxide and propylene oxide blocks. Starter compounds are generally OH functional low molecular weight alcohols and include materials such as propylene glycol, butanol or mono-ethanolamine or low molecular weight mono- or diamines such as ethylene diamine or propylene diamine.

In a preferred embodiment, the polyester (A)a) is initially produced by esterification and/ or transesterification from castor oil, one or more alcohols and unsaturated fatty acids or from castor oil and one or more triglycerides, which preferably have an iodine value of >50. The starting materials are heated to elevated temperatures of, for example, from 200 to 250°C, preferably in the presence of a catalyst. The course of the esterification or transesterification reaction may, for example, be monitored by gel chromatography. Catalysts which may be considered include the basic or acidic catalysts described in the literature (H. Zimmermann, Faserforsch. Textiltech. 13, p. 481 [1962]), for example sodium hydroxide, lithium hydroxide, lead oxide, lithium acetate, organotitanium, organozirconium, organozinc and organotin compounds. Basic catalysts such as alkali metal hydroxides are preferably used.

Preferably the polyester (A)a) is produced by transesterification of castor oil and drying oils with an iodine number >50, particularly preferred soybean oil.

The aqueous PU dispersion (A) is produced in the known conventional manner. A solvent may also be used which is then subsequently removed. Suitable solvents include conventional lacquer solvents, such as for example ethyl acetate, butyl acetate, ethylene glycol monomethyl or monoethyl ether acetate, 1-methoxy-2-propyl acetate, 3-methoxy-n-butyl acetate, acetone, 2-butanone, 4-methyl-2-pentanone, cyclohexanone, toluene, xylene, chlorobenzene, mineral spirits, mixtures primarily containing relatively highly substituted aromatics, as are commercially available for example under the names Solvent Naphtha, Solvesso® (Exxon), Cypar® (Shell), Cyclo Sol® (Shell), Tolu Sol® (Shell), Shellsol® (Shell), carbonic acid esters, such as dimethyl carbonate, diethyl carbonate, 1,2-ethylene carbonate and 1,2-propylene carbonate, lactones, such as β-propiotactone, γ-butyrolactone, ε-caprolactone and ε-methyl-caprolactone, as well as solvents such as propylene glycol diacetate, diethylene glycol dimethyl ether, dipropylene glycol dimethyl ether, diethylene glycol ethyl and butyl ether acetate, N-methylpyrrolidone and N-methylcaprolactam, or any desired mixtures of such solvents.

Any groups capable of neutralization are converted into the salt form by neutralization and the dispersion is produced with water. Depending upon the degree of neutralization, the dispersion may be adjusted to a very finely divided state, such that it virtually has the appearance of a solution, but very coarsely divided states are also possible, which are likewise sufficiently stable. The solids content may also be varied within broad limits from, for example from about 20 to about 50%.

Excess isocyanate groups are then reacted with isocyanate-reactive compounds (chain extension). To this end, water or polyamines are preferably used, particularly preferably di- and triamines and hydrazine. Termination with a monoamine, such as for example diethylamine, dibutylamine, ethanolamine, N-methylethanolamine or N,N-diethanolamine is also possible.

### Component B)

In addition to component A), the composition of the present invention also comprises from 1 to 99% by weight, preferably from 10 to 90% by weight, and most preferably from 25 to 75% by weight, of an aqueous polyurethane dispersion B) prepared from components comprising:
a) from 40 to 90% (and preferably from 50 to 80%) by weight of one or more acrylate polymers containing hydroxyl groups and having an OH number of from 40 to 120,
b) from 0.1 to 20% (and preferably from 2 to 15%) by weight of one or more compounds containing i) one and/or two functional groups compounds reactive towards isocyanate groups and ii) groups which are cationic and/or anionic and/or have a dispersant action due to ether groups content,
c) from 10 to 50% (and preferably from 15 to 40%) by weight of one or more di- and/or polyisocyanates,
d) from 0 to 30% (and preferably from 0 to 20%) by weight of a di-and/or polyol having a number average molecular weight of up to 5000, an OH functionality of from 1.2 to 2.2, containing no groups which are cationic or anionic, containing an insufficient amount of ether groups to have a dispersant action, and containing no ethylenically unsaturated groups and
e) from 0.1 to 10% (and preferably from 0.5 to 17%) by weight of one or more di- and/or polyamines having a number average molecular weight of from 31 to 1000,
wherein the percents by weight are based on the total amount of components B)a) through B)e) and total 100%.

The acrylate polymers (B)a)) are polycondensation products derived from polycarboxylic acids or the anhydrides thereof (such as, for example, adipic acid, sebacic acid maleic anhydride, fumaric acid and phthalic acid), di- and/or more highly functional polyols (such as for example ethylene glycol, propylene glycol, neopentyl glycol, trimethylolpropane, pentaerythritol, alkoxylated di- or polyols and the like) and acrylic and/or methacrylic acid. After polycondensation, excess carboxyl groups may be reacted with epoxides. Production of the acrylate polymers (B)a)) containing hydroxyl groups is described in U.S. Patent 4,206205, German Offenlegungschrifften 4,040,290, 3,316,592, and 3,704,098 and in UV & EB Curing Formulations for Printing Inks, Coatings & Paints, ed. R. Holman and P. Oldring, published by SITA Technology, London (England), 1988, pages 36 et seq. The reactions should be terminated once the OH number is within the range from 40 to 120. It is also possible to use polyepoxy acrylate polymers containing hydroxyl groups or polyurethane acrylate polymers containing hydroxyl groups. The C=C% can generally range from 0.1 to 10 moles/kg, based on the weight of component B)a).

Compounds B)b) which have a dispersant action effected cationically, anionically and/or by ether groups are those containing, for example, sulphonium, ammonium, carboxylate, sulphonate and/or polyether groups and contain isocyanate-reactive groups. Preferred suitable isocyanate-reactive groups are hydroxyl and amine groups. Representatives of compounds B)b) are bis(hydroxymethyl)propionic acid, maleic acid, glycolic acid, lactic acid, glycine, alanine, taurine, 2-aminoethylaminoethanesulphonic acid, polyoxyethylene glycols and polyoxypropylene/oxyethylene glycols started on alcohols. Bis(hydroxymethyl) propionic acid and polyethylene glycol monomethyl ether are particularly are particularly preferred.

The component B)c) can be any of the isocyanates described as being useful in preparing dispersion A) and may be the same as or different from the isocyanate component for dispersion A).

As di-and/or polyols B)d), it is possible to use substances with a molecular weight up to 5000. Suitable diols include, for example, propylene glycol, ethylene glycol, neopentyl glycol and 1,6-hexane diol. Examples of higher molecular weight polyols are the well known polyesterpolyols, polyetherpolyols and polycarbonate polyols which should have an average OH functionality of from 1.8 to 2,2. If appropriate it is also possible to use monofunctional alcohols such as ethanol and butanol.

Di- and/or polyamines (B)e) are used to increase molecular weight. Since this reaction proceeds in the aqueous medium, the di- and/or polyamines must be more reactive towards the isocyanate groups than water. Compounds which may be cited by way of example are ethylenediamine, 1,6-hexamethylenediamine, isophoronediamine, 1,3- and 1,4-phenylenediamine, 4,4'-diphenylmethanediamine, aminofunctional polyethylene oxides and polypropylene oxides (sold under the Jeffamine trademark), triethylenetetramine and hydrazine. Ethylenediamine is particularly preferred. It is also possible to add certain proportions of monoamines, and as for example butylamine and ethylamine.

The polyester acrylate/urethane dispersions (component B)) according to the invention may be produced using any known prior art methods, such as emulsifier/shear force, acetone, prepolymer mixing, melt/emulsification, ketimine and solid spontaneous dispersion methods or derivatives thereof (c.f. Methoden der Organischen Chemie, Houben-Weyl, 4th edition, volume E20/part 2, page 1682, Georg Thieme Verlag, Stuttgart, 1987). Experience has shown that the acetone method is the most suitable.

Components B)a), B)b) and B)d) are initially introduced into the reactor in order to produce the intermediates (polyester acrylate/urethane solutions), diluted with a solvent which is miscible with water but inert towards isocyanate groups and heated to relatively elevated temperatures, in particular in the range from 50° to 120°C. Suitable solvents are acetone, butanone, tetrahydrofuran, dioxane, acetonitrile and 1-methyl-2-pyrrolidone. Catalysts known to accelerate the isocyanate addition reaction may also be initially introduced, for example triethylamine, 1,4-diazabicyclo[2,2,2]octane, tin dioctoate or dibutyltin dilaurate. The polyisocyanate and/or polyisocyanates are added to these mixtures. The ratio of moles of all hydroxyl groups to moles of all isocyanate groups is generally between 0.3 and 0.95, in particular between 0.4 and 0.9.

Once the polyester acrylate/urethane solutions have been produced from B)a), B)b), B)c) and B)d), the component B)b) having an anionic or cationic dispersant action undergoes salt formation, unless this has already occurred in the starting molecules. In the case of anionic containing components, bases such as ammonia, triethylamine, triethanolamine, potassium hydroxide or sodium carbonate may advantageously be used, while in the case of cationic containing components, sulphuric acid dimethyl ester or succinic acid may advantageously be used. If component B)b) contains a sufficient amount of ether groups, the neutralization stage is omitted.

In the final reaction stage, in which an increase in molecular weight and the formation of the polyester acrylate/urethane dispersions occur in the aqueous medium, the polyester urethane solutions prepared from components B)a), B)b), B)c) and B)d) are either vigorously stirred into the dispersion water containing component B)e) or, conversely, the water/component B)e) mixture is stirred into the polyester urethane solutions. Molecular weight is then increased by the reaction of the isocyanate groups still present with the amine hydrogens and the dispersion (B) is also formed. The quantity of component B)e) used is dependent upon the unreacted isocyanate groups which are still present.

If desired, the solvent may be removed by distillation. The dispersions (B) then have a solids content of from 20 to 60% and preferably form 30 to 55% by weight.

### Component C

Component C), the photoinitiator, can be substantially any photoinitiator. A variety of photoinitiators can be utilized in the radiation-curing compositions of the present invention. The usual photoinitiators are the type that generate free radicals when exposed to radiation energy. Suitable photoinitiators include, for example, aromatic ketone compounds, such as benzophenones, alkylbenzophenones, Michler's ketone, anthrone and halogenated benzophenones. Further suitable compounds include, for example, 2,4,6-trimethylbenzoyldiphenylphosphine oxide, phenylglyoxylic acid esters, anthraquinone and the derivatives thereof, benzil ketals and hydroxyalkylphenones. Illustrative of additional suitable photoinitiators include 2,2-diethoxyacetophenone; 2- or 3- or 4-bromoacetophenone; 3- or 4-allyl-acetophenone; 2-acetonaphthone; benzaldehyde; benzoin; the alkyl benzoin ethers; benzophenone; benzoquinone; 1-chloroanthraquinone; p-diacetyl-benzene; 9,10-dibromoanthracene; 9,10-dichloroanthracene; 4,4-dichlorobenzophenone; thioxanthone; isopropylthioxanthone; methylthioxanthone; α,α,α-trichloro-para-t-butyl acetophenone; 4-methoxybenzophenone; 3-chloro-8-nonylxanthone; 3-iodo-7-methoxyxanthone; carbazole; 4-chloro-4'-benzylbenzophenone; fluoroene; fluoroenone; 1,4-naphthylphenylketone; 1,3-pentanedione; 2,2-di-sec.-butoxy acetophenone; dimethoxyphenyl acetophenone; propiophenone; isopropylthioxanthone; chlorothioxanthone; xanthone; maleimides and their derivatives; and mixtures thereof. There are several suitable photoinitiators commercially available from Ciba including Irgacure 184 (1-hydroxy-cyclohexyl-phenyl-ketone), Irgacure 819 (bis(2,4,6-trimethylbenzoyl)-phenylphosphineoxide), Irgacure 1850 (a 50/50 mixture of bis(2,6-dimethoxybenzoyl)-2,4,4-trimethylpentyl-phosphine oxide and 1-hydroxy-cyclohexyl-phenyl-ketone), Irgacure 1700 (a 25/75 mixture of bis(2,6-dimethoxybenzoyl)-2,4,4-trimethylpentyl-phosphine oxide and 2-hydroxy-2-methyl-1-phenyl-propan-1-one), Irgacure 907 (2-methyl-1[4-(methylthio)phenyl]-2-morpholonopropan-1-one), Darocur MBF (a phenyl glyoxylic acid methyl ester) and Darocur 4265 (a 50/50 mixture of bis(2,4,6-trimethylbenzoyl)-phenylphosphineoxide and 2-hydroxy-2-methyl-1-phenyl-propan-1-one). The foregoing lists are meant to he illustrative only and are not meant to exclude any suitable photoinitiators. Those skilled in the art will know the concentrations at which photoinitiators are effectively employed and generally the concentration will not exceed 10% by weight of the radiation-curable coating composition.

Those skilled in the art of photochemistry are fully aware that photoactivators can be used in combination with the aforementioned photoinitiators and that synergistic effects are sometimes achieved when such combinations are used. Photoactivators are well known in the art and require no further description to make known what they are and the concentrations at which they are effective. Nonetheless, one can mention as illustrative of suitable photoactivators, methylamine, tributylamine, methyldiethanolamine, 2-aminoethylethanolamine, allylamine, cyclohexylamine, cyclopentadienylamine, diphenylamine, ditolylamine, trixylylamine, tribenzylamine, n-cyclohexylethyleneimine, piperidine., N-methylpiperazine, 2,2-dimethyl-1,3-bis(3-N-morpholinyl)-propionyloxy-propane, and mixtures thereof.

### Other Additives

As is known in the art and depending on the application for the coating, additional additives can be used. Such additives include emulsifiers, dispersing agents, flow aid agents, thickening agents, defoaming agents, deaerating agents, pigments, fillers, flattening agents and wetting agents. In addition, where the article to be coated is of such a shape that portions of the coating may not be exposed to radiation, it is possible to add materials which crosslink through carboxyl groups, hydroxyl groups, amino groups or moisture. Such materials are known in the art and include carbodiimides, aziridines, polyvalent cations, melamine/formaldehyde, epoxies and isocyanates. Suitable carbodiimides are known and described, e.g., in U.S. Patents 5,104,928, 5,574,083, 5,936,043, 6,194,522, 6,300,409 and 6,566,437.

Suitable hydrophilic isocyanates are also known in the art and are commercially available. One commercially available isocyanate is Bayhydur 2336, a hydrophilic polyether modified hexamethylene diisocyanate trimer from Bayer Polymers LLC. When used, such crosslinkers should be used in an amount of from 0.1 to 35% by weight based on the combined weight of components A) and B).

### Applying and Curing

Generally, components A) and B) are first mixed together (component D) is present in both component A) and B) and then component C) and any other additives are added thereto. The composition of the invention may be applied onto the most varied substrates by spraying, rolling, knife-coating, pouring, brushing or dipping. The water present is then flashed off by baking in a conventional oven at a temperature of from 20 to 110°C preferably from 35 to 60°C for a period of from 1 to 10 minutes, preferably from 4 to 8 minutes. The water can also be flashed off using a radiation source like infra-red or microwave.

Once the water has baked off, the coated substrate is subjected to UV radiation having a wavelength of at least 300 nm and preferably radiation having wavelength of from 320 to 450 nm. The distance between the surface and the radiation source will depend upon the intensity of the light source and should generally be no more than three feet. The length of time the coated substrate is subjected to the radiation will depend on the intensity and wavelength of the radiation, the distance from the radiation sources, water content in the formulation, temperature and the humidity of the cure surroundings but will generally be less than 10 minutes and may be as short as 0.1 second.

The cured coatings are distinguished by their sandability.

As noted above, the compositions are curable using radiation sources having wavelengths of at least 300 nm and preferably from 320 to 450 nm. The radiation can be provided by any suitably source such as UV lamps having reduced infrared emission or UV lamps fitted with filters to eliminate infrared emissions or so-called LEDs (light-emitting devices) emitting radiation in the wavelength noted. Particularly useful commercially available devices include: the Panacol UV H-254 lamp (available from Panacol-Elosol GmbH) - a 250 W ozone-free, iron doped metal halide lamp with spectral wavelength of from 320 to 450 nm; Panacol UVF-450 (320 nm to 450 nm depending on the black, blue or clear filter used); Honle UVA HAND 250 CUL (available from Honle UV America Inc) - emitting maximum intensity UVA range of ∼320 to 390 nm; PMP 250 watt metal halide lamp (available from Pro Motor Car Products Inc); Cure-Tek UVA-400 (available from H&S Autoshot) which has a 400-watt metal halide bulb and the lamp assembly can be fitted with different filters like blue, light blue or clear to control/eliminate the infra-red radiation from the lamp source); Con-Trol-Cure Scarab-250 UV-A shop lamp system (available from UV Process Supply Inc. - has a 250 W iron doped metal halide lamp with a spectral wavelength output of 320 to 450 nm); Con-Trol-Cure - UV LED Cure-All 415 (available from UV Process Supply Inc. - spectral wavelength of 415 nm with a 2.5 to 7.95 W operating wattage range), the Con-Trol-Cure - UV LED Cure-All 390 (available from UV Process Supply Inc. - spectral wavelength of 390 nm with a 2.76 to 9.28 W operating wattage range) and the UV H253 UV lamp (available from UV Light Technologies - the unit contained a 250 W iron doped metal halide lamp fitted with a black glass filter to produce a spectral wavelength of between 300 and 400 nm).

The examples that follow are intended to illustrate the invention without restricting its scope. Unless otherwise indicated, all %'s and parts are by weight.

### EXAMPLES

In the examples, the following materials were used:
V35A - sodium salt of 2-ethylhexyl acid phosphate - Victawet 35A, a dispersing agent available form Akzo Nobel Chemicals, Inc.
B348 - Byk 348, a polyether siloxane flow aid additive available from BYK-Chemie USA
LW44 - Borchers LW44, a non-ionic polyurethane based thickening agent available from Borchers
D1293 - Dehydran 1293, a polysiloxane defoaming and deaerating agent available from Cognis Corporation
TIO2 - TiO₂ R-960, available from DuPont
CC - calcium carbonate, Vicron 15-15, available from Whittaker, Clark & Daniels, Inc.
T399 - Talc 399, available from Whittaker, Clark & Daniels, Inc.
B318 - an iron oxide pigment available as Bayferrox 318M from Bayer Chemicals Corporation
IRG819 - Irgacure 819DW photoinitiator, available from Ciba Specialty Chemicals
IRG2959 - Irgacure 2959 photoinitiator available from Ciba Specialty Chemicals [4-(2-hydroxyethoxy)phenyl-(2-hydroxy-2-propyl)ketone]
IRG500 - Irgacure 500 photoinitiator available from Ciba Specialty Chemicals (a 50/50 blend of benzophenone and 1-hydroxy cyclohexyl phenyl ketone)
TS100 - Acematt TS100, a flattening agent available from DeGussa-Huels Corporation (amorphous fumed silica)
XL-1422 - Experimental XL-1422 crosslinker from Rohm and Haas (Aromatic polycarbodiimide in propyleneglycol methyl ether acetate)
GXP7008 - Rucote GXP 7008 from Bayer Polymers LLC (Allyl functional unsaturated polyester powder resin)
GXP7009 - Rucote GXP 7009 from Bayer Polymers LLC (Fumaric acid based unsaturated polyester powder resin)
FAC314 from Bayer Polymers LLC (Des-W based Solid Urethane Acrylate resin)
A25P - Modarez MFP-A 25P from Synthron Chemicals (Flow Modifier for powder coatings typically low molecular weight acrylates)
OA4 - Oxymelt A4 from Estron Chemicals, a degassing agent for powder coatings
R921 - Rucote 921 - carboxyl functional polyester resin (acid value between 35 and 40) available from Bayer Polymers LLC and used in TGIC cure powder coatings
TGIC - triglycydylisocyanurate - available from Ciba Specialty Chemicals Inc. as Araldite PT810
GXP5008 - Rucote 5008 - a carboxyl functional polyester resin (acid value between 75 and 85) available from Bayer Polymers LLC
E2002 - Epon 2002 - a solid bisphenol A/epichlorodhydrin epoxy resin available from Resolution Performance Products (epoxide equivalent weight form 675 to 760)
BENZ - benzoin degassing agent (2-hydroxy-2-phenyl acetophenone)
RP67 - Resiflow P-67 low molecular weight acrylate flow modifier available from Estron Chemicals

Polyester Oligome - 3200 parts of castor oil and 1600 parts of soybean oil are weighed out with 2.4 parts of lithium hydroxide into a 5 liter reactor with a reflux condenser. A stream of nitrogen (5l/h) is passed through the reactants. The temperature is raised to 240°C within 140 minutes. After 2 hours at 240°C, the temperature is reduced. The resulting oligomer had an OH number of 110 and an acid number of 3.

PU Dispersion A: 95.06 parts of a 2000 molecular weight polytetramethylene oxide glycol, 69.53 parts of Polyester Oligomer, 19.54 parts of dimethylolpropionic acid, 9.61 parts of 1,6-hexane diol and 50.1 parts of N-methylpyrrolidone are heated to 70°C and stirred until a clear solution is obtained. 144.69 parts of 4,4'-diisocyanatodicyclohexylmethane are then added, and the mixture is heated to 100°C. Stirring is continued at this temperature until the NCO content is about 4.6%. The temperature is then reduced to 70°C and 10.06 parts of triethylamine are added. The resultant solution is dispersed with vigorous stirring in 531.06 parts of water, which is initially introduced at 30°C. Stirring is continued for 5 minutes after dispersion. A solution of 4.39 parts of hydrazine hydrate and 7.02 parts of ethylene diamine in 58.95 parts of water is then added within 5 minutes. The resultant solution is dispersed with vigorous stirring in 531.06 parts of water, which is introduced at 30°C. The isocyanate groups are completely consumed by reaction by stirring at 45°C until no NCO is detectable by IR spectoscopy. The resultant dispersion has an acid value of about 24, a viscosity of about 70 mPas (D = 100 s⁻¹) and a solids content of about 35% by weight.

PU Dispersion B: A mixture of 31.81 parts of IPDI and 15.9 parts of HDI are added to refluxing mixture of 133.12 parts of a polyester acrylate (Laromer LR 8799, available from BASF, having an OH number of 82), 3.24 parts of neopentyl glycol, 8.34 parts of dimethylolpropionic acid, 0.19 parts of dibutylltin dilaurate and 48.16 parts of acetone. The solution is refluxed for 5 hours with stirring. After cooling the mixture, 5.04 parts of triethylamine are added at 40 C. After cooling to room temperature, the solution is vigorously stirred in 299.32 parts of water which contains 2.99 parts of ethylene diamine. A dispersion is then spontaneously formed. Once the isocyanate groups have completely reacted, the solvent is removed by vacuum distillation. The resultant dispersion has a solids content of 39.13% by weight.

### Example 1:

60 parts by weight of Polyurethane Dispersion A and 60 parts by weight of Polyurethane Dispersion B were mixed together. 0.53 parts by weight of V35A, 0.5 parts by weight of B348, 0.9 parts by weight of LW44, 0.8 parts by weight of D1293, 1.19 parts by weight of TIO2, 14.2 parts by weight of CC, 20.4 parts by weight of T399, 0.2 parts by weight of B318, 1.88 parts by weight of IRG819 and 36.8 parts by weight of water were added slowly to the dispersion mixture with continued stirring. The waterbased formulation prepared was kept overnight to de-aerate. The formulation was then applied to a cold rolled steel substrate by spraying with a Binks Model #2001 air-type siphon gun (air pressure 38 - 40 psi) to a wet film thickness of 4 mils.

The formulation was cured under a low intensity UV-A light source (a Panacol UV H-254 lamp - 250 W Ozone Free Iron doped metal halide lamp with spectral wavelength of 320-450 nm) for 8 minutes at a 6 inch distance at a dry film thickness of 1.0 to 1.2 mils resulting in a tack free surface. It had excellent adhesion to cold rolled steel as measured by crosshatch test (ASTM D3359-95 and General Motors GM 9071 P Tape Adhesion Tests). The coating could be sanded with #320 grit sandpaper and base coated immediately right after curing. It exhibited excellent hiding.

### Example 2:

The same formulation used in Example 1 was applied in the same manner to a cold rolled steel substrate. In this example, the coating was prebaked at 50°C for 8 minutes to flash-off the water, followed by exposure to radiation from LED source at 1/4 inch distance using a Con-Trol-Cure - UV LED Cure-All 415 device or a Con-Trol-Cure - UV LED Cure-All 390 device. A tack free surface with good solvent resistance resulted. The details are shown in Table 1. The column entitled "Prebake Only" shows results where the coatings were not subjected to radiation. The primer had excellent adhesion to cold rolled steel as measured by crosshatch test (ASTM D3359-95 and General Motors GM 9071 P Tape Adhesion Tests). The coating could be sanded with #320 grit sandpaper and base coated immediately, right after curing. It exhibited excellent hiding.

**Table 1: LED radiation curable pigmented primer**

| Test Results | | | *MEK Double Rubs* | *MEK Double Rubs* |
|---|---|---|---|---|
| *Prebake* | *Radiation Source* | *Time\Distance* | *Prebake Only-Comparison* | *Prebake and Radiation* |
| 50°C/ 8 min. | 415 C-T -C | 2 min.\ ¼ inch | 10 | >100 |
| " | 415 C-T -C | 3 min.\ ½ inch | 17 | > 100 |
| " | 390 C-T-C | 2 min.\ ¼ inch | 8 | 50 |

### Example 3:

60 parts by weight of Polyurethane Dispersion A and 60 parts by weight of Polyurethane Dispersion B were mixed together. 0.5 parts by weight of TS100, 0.5 parts by weight of B348, 0.9 parts by weight of LW44, 0.8 parts by weight of D1293, 1.88 parts by weight of IRG819 and 36.8 parts by weight of water were added slowly to the dispersion mixture with continued stirring. The waterbased formulation prepared was kept overnight to de-aerate. The formulation was then applied to a wood substrate by spraying with the same device used in Example 1.

The wet clear-coated panel was baked at 38°C for 7 minutes to flash-off the water and resulted in a tack-free surface. Curing the coating under a low intensity Panacol UV H-254 lamp at 10 inch distance, at a wet film thickness of 4 to 5 mils for 8 minutes resulted in a coating with high pendulum hardness (dry film thickness of 1.0 to 1.5 mils). It had excellent adhesion to wood substrate as measured by crosshatch test (ASTM D3359-95 and General Motors GM 9071 P Tape Adhesion Tests). The coating could be sanded with #320 grit sandpaper and top coated immediately right after curing. It had good solvent resistance and excellent block resistance.

Block resistance test was conducted as follows: the test was performed 1 hour after curing the coating. A 1" x 1" square of cheesecloth was placed on surface of coating. 2 Lbs./per square inch of force was then applied to the cheesecloth by placing weight on it. After 24 hours, the weight and cheesecloth were removed and the coating surface was observed for any defects/changes.

### Example 4:

The same formulation used in Example 3 was applied in the same manner to a cold rolled steel substrate. In this example, the coating was prebaked at 50°C for 10 minutes to flash-off the water followed by exposure to radiation from an LED source at 1/4 inch distance using a Con-Trol-Cure - UV LED Cure-All™ 415 device. A second coating was prebaked at 50°C for 10 minutes to flash-off the water followed by exposure to radiation from an LED source at 1/2 inch distance using a Con-Trol-Cure - UV LED Cure-All™ 415 device. A tack-free surface with good solvent resistance resulted in each instance. The details are shown in Table 2. The column entitled "Prebake Only" shows results where the coating was not subjected to radiation. The coating could be sanded with #320 grit sandpaper and base coated right after curing.

**Table 2: LED radiation curable clear sealer**

| Test Results | | | *MEK Double Rubs* | *MEK Double Rubs* |
|---|---|---|---|---|
| *Prebake* | *Radiation Source* | *Time\ Distance* | *Prebake Only-Comparison* | *Prebake and Radiation* |
| 50°C/ 10 min | 415 C-T -C | 2 min.\ 1\4 inch | 10 | 55 |
| " | 415 C-T -C | 3 min.\ 1\2 inch | 10 | 75 |

### Example 5:

300.2 parts by weight of Polyurethane Dispersion A and 300.2 parts by weight of Polyurethane Dispersion B were mixed together. 39.37 parts by weight of XL-1422, 2.22 parts by weight of TS100, 2.44 parts by weight of B348, 4.56 parts by weight of LW44, 4.00 parts by weight of D1293, 1.18 parts by weight of IRG819, 15.79 parts by weight of IRG500 and 184.12 parts by weight of water were added slowly to the dispersion mixture with continued stirring. The potlife or working time of this formulation was 6 hours. The formulation was applied to a wood substrate by spraying to a dry film thickness of 1.0 to 1.5 mils using the same device as used in the previous examples.

The above formulation consisted of an UV Curable PUD, a self-crosslinking PUD and a carbodiimide crosslinker. The curing mechanisms were free radical cure by UV radiation and carboxyl crosslinking with carbodiimide crosslinker. The additional curing mechanism provided by the carbodiimide crosslinker improved the coatings performance in areas that were not exposed to UV radiation. This formulation would have use in the field of furniture coatings. This formulation helps cure objects that are difficult to cure just with UV radiation (e.g., 3-D objects). The coatings were applied by spraying to a wood substrate and were cured using either a Cure-Tek UVA-400 device ("UVA") or a Fusion UV cure microwave lamp ("FUV") (Medium pressure microwave powered mercury vapor lamp with maximum output of 600 watts/inch; low intensity = 25 mJ radiation exposure; high intensity = 800 mJ radiation exposure). The coatings test results are shown in Table 3 below. The formulation from Example 3 was compared to that of Example 5 in order to show the effect of adding the carbodiimide. In the table which follows: the following test steps were followed: a) the reagent was applied to the coating using a dropper; b) the test area was either covered with a clear glass petri-dish and was undisturbed for 16 hours or was not covered and undisturbed for 16 hours; c) if used, the petri-dish was removed; d) the reagent was wiped with a paper towel; and e) the coating was observed and the appearance was recorded. The softness was measured using a wooden applicator stick. In the table, the following designations were used: i) "Soft" - Visual change; ii) "Soft-*" - the film was is not affected (no damage) until scraped with wooden stick (film returns to original hardness) and iii) "Soft-ST" - the coating turns soft, with the reagent staining the surface.

**Table 3**

| **Coating System** | **Bake Schedule** | **UV Radiation Source** | **Ethanol/water 1/1 weight ratio** | | **Acetone** | **Acetone** | **Murphy's oil soap**^{*a} | |
|---|---|---|---|---|---|---|---|---|
| 16 hour exposure | | | Covered^{*b} | Uncovered | Covered | Uncovered | Covered | Uncovered |
| | | | | | | | | |
| Example 3 | 150°F/15 min | no UV | Soft | Soft | Soft | Soft | Soft | Soft |
| Example 5 | 150°F/15 min | no UV | No effect | No effect | Soft-* | No effect | Soft-* | No effect |
| | | | | | | | | |
| Example 3 | 150°F/15 min | 6 mins UVA | No effect | No effect | Soft-ST | No effect | Soft | Soft |
| Example 5 | 150°F/15 min | 6 mins UVA | No effect | No effect | Soft-ST | No effect | No effect | No effect |
| | | | | | | | | |
| Example 3 | 150°F/15 min | FUV - Low intensity | Soft | No effect | Soft | Soft | Soft | No effect |
| Example 5 | 150°F/15 min | FUV - Low intensity | No effect | No effect | Soft-* | No effect | Soft-* | No effect |
| | | | | | | | | |
| Example 3 | 150°F/15 min | FUV - High intensity | Soft-* | No effect | Soft | Soft | No effect | No effect |
| Example 5 | 150°F/15 min | FUV -High intensity | Soft-* | No effect | Soft-* | No effect | No effect | No effect |

### Example 6:

60 parts by weight of Polyurethane Dispersion A and 60 parts by weight of Polyurethane Dispersion B were mixed together. 12 parts by weight of Bayhydur 2336 (an isocyanate terminated hydrophilic polyether modified hexamethylene diisocyanate trimer commercially available from Bayer Polymers LLC), 0.5 parts by weight of TSAC1 00, 0.5 parts by weight of B348, 0.9 parts by weight of LW44, 0.8 parts by weight of D1293, 1.88 parts by weight of IRG819 and 36.8 parts by weight of water were added slowly to the dispersion mixture with continued stirring. The potlife or working time of this formulation was 4 hours. The formulation was applied to a wood substrate by spraying to a dry film thickness of 0.8 to 1.0 mils using the same spray device as used in the previous examples.

The above formulation consisted of a UV curable PUD, a self-crosslinking PUD and a water dispersible polyisocyanate. The curing mechanisms included free radical cure by UV radiation and crosslinking using NCO groups. The additional curing mechanism provided by the NCO groups improved the coatings performance in areas that were not exposed to UV radiation. The coatings were applied by spraying to a wood substrate and were cured using a Cure-Tek UVA-400 device. The coatings test results are shown in Table 4 below. The formulation from Example 3 was compared to that of Example 6 in order to show the effect of adding the isocyanate. The formulation of Example 6 allows for the cure of objects that are difficult to cure just with UV radiation (e.g., 3-D objects). The coatings test results are shown in Table 4 below.

**Table 4**

| Formulation | Prebake | Radiation time/ Distance | Initial Pendulum Hardness | Pendulum Hardness after 7 days | Pendulum Hardness after 14 days |
|---|---|---|---|---|---|
| Example 3 | 7 mins at 100°F | No UV | 23 sec | 34 sec | 34 sec |
| Example 3 | 7 mins at 100°F | 6 mins/ 10 inches | 98 sec | 106 sec | 115 sec |
| Example 6 | 7 mins at 100°F | No UV | 64 sec | 123 sec | 119 sec |
| Example 6 | 7 mins at 100°F | 6 mins/ 10 inches | 63 sec | 137 sec | 140 sec |

Pendulum hardness (Konig type) was measured using a, BYK-Gardner Model Instrument using DIN 53157 method. The addition of isocyanate groups also improved the chemical resistance and Murphy's oil soap resistance.

### Example 7:

This example shows the development of a complete UV curable system comprising of: a UV curable water-based primer and a UV curable powder topcoat. The system is a complete UV curable system that has an acrylate monomer-free water-based UV curable primer and a UV curable powder topcoat with excellent nickel scratch hardness.
Step 1: The formulation shown in Example 1 was first applied to a heat-sensitive substrate (i.e., medium density fiber board) and cured under low intensity light.
Step 2: The substrate was then coated with a UV curable powder topcoat formulation as shown in Example 7A, 7B, 7C and 7D. The substrate was heated to make the powder coating flow and level followed by curing with low intensity UV radiation.

### Example 7A:

114.38 parts by weight of GXP7008, 114.38 parts by weight of GXP7009, and 57.19 grams by weight of FAC314 were mixed together. 2.86 parts by weight of A25P, 1.43 parts by weight of OA4, 5.719 parts by weight of IRG819, and 7.5 parts by weight of TIO2 were mixed well with the resins. The powder mixture was then extruded twice using a Prism 24PC twin screw extruder keeping the zone 1 temperature at 50°C and zone 2 temperature at 75°C, keeping the torque values between 40 to 60 and the screw RPM at 250. The extruded material was ground using a Strand high speed grinder and sieved using a #200 mesh.

### Example 7B:

571.9 parts by weight of FAC314 were mixed together with 5.719 parts by weight of A25P. 2.86 parts by weight of OA4, 11.438 parts by weight of IRG819 and 5.719 parts by weight of IRG2959 were mixed well with the resins. The powder mixture was then extruded twice using a Prism 24PC twin screw extruder keeping the zone 1 temperature at 50°C and zone 2 temperature at 75°C, keeping the torque values between 40 to 60 and the screw RPM at 250. The extruded material was ground using a Strand high speed grinder and sieved using a #200 mesh.

### Example 7C:

609.15 parts by weight of R921 was mixed together with 45.85 parts by weight of TGIC, 10 parts by weight of RP67, 5 parts by weight of BENZ and 330 parts by weight of TIO2. The powder mixture was then extruded twice using a Prism 24PC twin screw extruder keeping the zone 1 temperature at 30°C and zone 2 temperature at 90°C, keeping the torque values between 60 to 80 and the screw RPM at 400. The extruded material was ground using a Strand high speed grinder and sieved using a #200 mesh.

### Example 7D:

327.5 parts by weight of R5008 was mixed together with 327.5 parts by weight of E2002, 10 parts by weight of flow modifier RP67, 5 parts by weight of BENZ and 330 parts by weight of TIO2. The powder mixture was then extruded twice using a Prism 24PC twin screw extruder keeping the zone 1 temperature at 30°C and zone 2 temperature at 90°C, keeping the torque values between 60 to 80 and the screw RPM at 400. The extruded material was ground using a Strand high speed grinder and sieved using a #200 mesh.

### Example 7E:

The same formulation used in Example 1 was applied in the same manner to a medium density fibreboard ("MDF") substrate. The formulation was cured under a low intensity UV-A light source (H&S Autoshot Cure-Tek UVA-400) for 8 minutes at a 6 inch distance resulting in a dry film thickness of 1.8 to 2.0 mils. The primed MDF was then sanded with #320 grit sandpaper to form a smooth surface.

The sanded primed MDF substrate was then preheated in a conventional thermal oven at 130°C for 7 minutes followed by electrostatic spray application of the powder coating of Example 7A using a Nordson Versa Spray II gun. The substrate was then placed in the oven at 130°C for 10 minutes followed by exposure to low intensity UV-A light source (H&S Autoshot Cure-Tek UVA-400) for 8 minutes at a 6 inch distance. The resulting coating had excellent adhesion to the primer as measured by crosshatch test (ASTM D3359-95 and General Motors GM 9071 P Tape Adhesion Tests). It had exceptional nickel scratch hardness as shown in Table 5.

**Table 5: UV-A radiation curable powder topcoat**

| Substrate | Powder topcoat on unprimed MDF | Powder topcoat on primed MDF |
|---|---|---|
| | | |
| Adhesion | 3B | 5B |
| Nickel Scratch Hardness | Pass 2 kg weight scratch | Pass 7 kg weight scratch |

Nickel scratch hardness was measured using a simple device that has a nickel (US 5 cents) mounted on an inclined holder that is positioned to touch the coating at 45° angle. Increasing amount of weight is added on top of the nickel holder so that the force applied on the coating increases. The nickel is then moved across the coating and the appearance change is measured visually. If the weight added does not impact the coating then it passed the test. If the weight added gouges or scratches the coating significantly then it failed the test. This method provides a good quantitative measurement.

### Example 7F:

The same formulation used in Example 1 was applied in the same manner to a medium density fibreboard substrate. The formulation was cured under a low intensity UV-A light source (H&S Autoshot Cure-Tek UVA-400) for 8 minutes at a 6 inch distance resulting in a dry film thickness of 1.8 to 2.0 mils. The primed MDF was sanded with #320 grit sandpaper to form a smooth surface.

The sanded primed MDF substrate was then preheated in a conventional thermal oven at 130°C for 7 minutes followed by electrostatic spray application of the powder coating shown in Example 7A using the Nordson Versa Spray II gun. The substrate was then placed in the oven at 130°C for 10 minutes followed by exposure from an LED source at 1/4 inch distance using a Con-Trol-Cure - UV LED Cure-All 415 device for various time intervals. The resulting coating developed good solvent resistance and hardness. It had excellent adhesion to the primer as measured by crosshatch test (ASTM D3359-95 and General Motors GM 9071 P Tape Adhesion Tests). The details are shown in Table 6.

**Table 6: UV-A radiation curable pigmented powder topcoat**

| Radiation exposure Time\Distance | Adhesion of powder topcoat to unprimed MDF | Adhesion of topcoat to primed MDF |
|---|---|---|
| | | |
| 2 min.\ ¼ inch | 3B | 5B |
| 1 min.\ ¼ inch | 2B | 5B |
| 45 secs.\ ¼ inch | 1B | 5B |

### Example 7G:

The same formulation used in Example 1 was applied in the same manner to a medium density fibreboard substrate. The formulation was cured under a low intensity UV-A light source (H&S Autoshot Cure-Tek UVA-400) for 8 minutes at a 6 inch distance resulting in a dry film thickness of 1.8 to 2.0 mils. The primed MDF was sanded with #320 grit sandpaper to form a smooth surface.

The sanded primed MDF substrate was then preheated in a conventional thermal oven at 130°C for 5 minutes followed by electrostatic spray application of the powder coating shown in Example 7B using the Nordson Versa Spray II gun. The substrate was then placed in the oven at 130°C for 10 minutes followed by exposure to low intensity UV-A light source (H&S Autoshot Cure-Tek UVA-400) for 8 minutes at a 6 inch distance. The resulting coating had excellent adhesion to the primer as measured by crosshatch test (ASTM D3359-95 and General Motors GM 9071 P Tape Adhesion Tests). It had exceptional nickel scratch hardness as shown in Table 7.

**Table 7: UV-A radiation curable_powder clear topcoat**

| Substrate | Powder clear topcoat on unprimed MDF | Powder clear topcoat on primed MDF |
|---|---|---|
| | | |
| Adhesion | 4B | 5B |
| Nickel Scratch Hardness | Pass 5 kg weight scratch | Pass 10 kg weight scratch |

### Example 7H

This example shows that a TGIC (polyester-TGIC) powder topcoat can also be thermally cured and get superior nickel scratch hardness.

The same formulation used in Example 1 was applied in the same manner to a medium density fibreboard substrate. The formulation was cured under a low intensity UV-A light source (H&S Autoshot Cure-Tek UVA-400) for 8 minutes at a 6 inch distance resulting in a dry film thickness of 1.8 to 2.0 mils. The primed MDF was sanded with #320 grit sandpaper to form a smooth surface.

The sanded primed MDF substrate was then preheated in a conventional thermal oven at 130°C for 5 minutes followed by electrostatic spray application of the powder coating shown in Example 7C using the Nordson Versa Spray II gun. The substrate was then placed in the oven and cured at 140°C for 20 minutes. The resulting coating had excellent adhesion to the primer as measured by crosshatch test (ASTM D3359-95 and General Motors GM 9071 P Tape Adhesion Tests). It had exceptional nickel scratch hardness as shown in Table 8.

**Table 8: Thermal cure TGIC powder topcoat over UV-A cured primer**

| Substrate | Powder topcoat on unprimed MDF | Powder topcoat on primed MDF |
|---|---|---|
| | | |
| Adhesion | 3B | 5B |
| Nickel Scratch Hardness | Pass 3 kg weight scratch | Pass 7 Kg weight scratch |

### Example 7I:

This example shows that a hybrid (polyester-epoxy) powder topcoat can also be thermally cured and get superior nickel scratch hardness.

The same formulation used in Example 1 was applied in the same manner to a medium density fibreboard substrate. The formulation was cured under a low intensity UV-A light source (H&S Autoshot Cure-Tek UVA-400) for 8 minutes at a 6 inch distance resulting in a dry film thickness of 1.8 to 2.0 mils. The primed MDF was sanded with #320 grit sandpaper to form a smooth surface.

The sanded primed MDF substrate was then preheated in a conventional thermal oven at 130°C for 5 minutes followed by electrostatic spray application of the powder coating shown in Example 7D using the Nordson Versa Spray II gun. The substrate was then placed in the oven and cured at 140°C for 20 minutes. The resulting coating had excellent adhesion to the primer as measured by crosshatch test (ASTM D3359-95 and General Motors GM 9071 P Tape Adhesion Tests). It had exceptional nickel scratch hardness as shown in Table 9.

**Table 9: Thermal cure hybrid powder topcoat over UV-A cured primer**

| Substrate | Powder topcoat on unprimed MDF | Powder topcoat on primed MDF |
|---|---|---|
| Adhesion | 3B | 5B |
| Nickel Scratch Hardness | Pass 3 kg weight scratch | Pass 6 kg weight scratch |

## Claims

1. A composition curable by radiation having a wavelength of 300 nm or more, comprising:
A) from 1 to 99% by weight of an aqueous polyurethane dispersion having a solids content of from 20 to 50% by weight and being prepared from components comprising:
a) from 5 to 50% by weight of a polyester prepared from
ai) from 30 to 85% by weight of castor oil fatty acid,
aii) from 10 to 60% by weight of one or more carboxylic acids having from 8 to 30 carbon atoms and from 0 to 4 C=C double bonds and
aiii) from 3 to 20% by weight of one or more alcohols with an average functionality of from 2.5 to 3.5,
wherein the percentages of components A)ai) through A)aiii) total 100%,
b) from 5 to 60% of one or more polyisocyanates,
c) from 0.5 to 40% by weight of one or more non-hydrophilic polymeric polyols having number average molecular weights of 500 to 6000,
d) from 0 to 10% by weight of a monoalcohol and or a monoamine,
e) from 0.5 to 15% by weight of a material having a number average molecular weight of below 500 and being selected from the group consisting of polyols, an aminopolyols and polyamines, and
f) from 0 to 10% by weight of an OH- and/or an NH-functional, nonionic, hydrophilic polyoxyalkylene ether, having a number average molecular weight of from 250 to 3000,
wherein the percentages of components A)a) through A)f) total 100%,
B) from 1 to 99% by weight of an aqueous polyester acrylate/urethane dispersion having a solids content of from 20 to 60% by weight and prepared by reaction of
a) from 40 to 90% by weight of one or more acrylate polymers containing hydroxyl groups and having an OH number of from 40 to 120,
b) from 0.1 to 20% by weight of one or more compounds containing i) one and/or two functional groups compounds reactive towards isocyanate groups and ii) groups which are cationic and/or anionic and/or have a dispersant action due to ether groups content,
c) from 10 to 50% by weight of one or more di- and/or polyisocyanates,
d) from 0 to 30% by weight of a di-and/or polyol having a number average molecular weight of up to 5000, an OH functionality of from 1.8 to 2.2, containing no groups which are cationic or anionic, containing an insufficient amount of ether groups to have a dispersant action and containing no ethylenically unsaturated groups, and
e) from 0.1 to 10% by weight of one or more di- and/or polyamines having a number average molecular weight of from about 31 to 700,
wherein the percents by weight are based on the total amount of components B)a) through B)e) and total 100%,
C) from 0.1 to 10% by weight of one or more photoinitiators, wherein the % by weight of component C) is based on the combined weight of components A) and B) and wherein the percentages of components A) and B) total 100%, and
D) from 20 to 60% by weight of water or a mixture of water and solvent, wherein the % by weight of component D) is based on the total combined solids content of components A) and B).

2. The composition of Claim 1, wherein component A) is present in amount of from 10% to 90% by weight, component B) is present in an amount of from 10 to 90% by weight and component C) is present in an mount of from 0.5 to 6% by weight.

3. The composition of Claim 2, wherein component A) is present in amount of from 25% to 75% by weight, component B) is present in an amount of from 25 to 75% by weight and component C) is present in an mount of from 1 to 4% by weight.

4. The composition of Claim 1, wherein component B)a) is used in amount of from 50 to 80% by weight, component B)b) is used in amount of from 2 to 15% by weight, component B)c) is used in amount of from 15 to 40% by weight, component B)d) is used in amount of from 0 to 20% by weight and component B)e) is used in amount of from 0.5 to 7% by weight.

5. The composition of Claim 1, wherein component A)a) is prepared by reacting from 50 to 70% by weight of component A)a)i), from 25 to 35% by weight of component A)a)ii) and from 5 to 15% by weight of component A)a)iii).

6. The composition of Claim 1, wherein component A)c) has an OH functionality of from 1.8 to 4 and a number average molecular weight of from 800 to 2500.

7. The composition of Claim 1, wherein component A)d) has a number average molecular weight of from 31 to 1000.

8. The composition of Claim 1, wherein component B)a) contains from 0.1 to 10 moles /kg, based on the weight of component B)a), of C=C bonds.

9. The composition of Claim 1, wherein component B) has a solids content of from 30 to 55% by weight.

10. The composition of Claim 1 further comprising from 0.1 to 35% by weight of a material that crosslinks through carboxyl groups, hydroxyl groups, amino groups or moisture.

11. A process for coating a substrate comprising
i) applying the composition of Claim 1 to a substrate and
ii) subjecting the coated substrate to radiation having a wavelength of 300nm or more for a time sufficient to cure the composition.

12. The process of Claim 11, wherein the wavelength of said radiation is from 320 to 450 nm.

13. The product produced according to the process of Claim 12.

## Patentansprüche

1. Zusammensetzung, härtbar durch Strahlung mit einer Wellenlänge von 300 nm oder höher, umfassend:
A) 1 bis 99 Gew.-% einer wässrigen Polyurethandispersion mit einem Feststoffgehalt von 20 bis 50 Gew.-%, hergestellt aus Komponenten, umfassend:
a) 5 bis 50 Gew.-% eines Polyesters, hergestellt aus
ai) 30 bis 85 Gew.-% Rizinusölfettsäure,
aii) 10 bis 60 Gew.-% einer oder mehrerer Carbonsäuren mit 8 bis 30 Kohlenstoffatomen und 0 bis 4 C=C-Doppelbindungen und
aiii)3 bis 20 Gew.-% eines oder mehrerer Alkohole mit einer mittleren Wertigkeit von 2,5 bis 3,5,
wobei die Prozentwerte der Komponenten A)ai) bis A)aiii) zusammen 100% ergeben,
b) 5 bis 60% eines oder mehrerer Polyisocyanate,
c) 0,5 bis 40 Gew.-% eines oder mehrerer nicht hydrophiler polymerer Polyole mit einem zahlenmittleren Molekulargewicht von 500 bis 6000,
d) 0 bis 10 Gew.-% eines Monoalkohols und/oder eines Monoamins,
e) 0,5 bis 15 Gew.-% eines Materials mit einem zahlenmittleren Molekulargewicht von unter 500, das aus der aus Polyolen, Aminopolyolen und Polyaminen bestehenden Gruppe ausgewählt ist, und
f) 0 bis 10 Gew.-% eines OH- und/oder eines NH-funktionalen, nichtionischen, hydrophilen Polyoxyalkylenethers mit einem zahlenmittleren Molekulargewicht von 250 bis 3000,
wobei die Prozentwerte der Komponenten A)a) bis A)f) zusammen 100% ergeben,
B) 1 bis 99 Gew.-% einer wässrigen Polyester-acrylat-Urethan-Dispersion mit einem Feststoffgehalt von 20 bis 60 Gew.-%, hergestellt durch Umsetzung von
a) 40 bis 90 Gew.-% eines oder mehrerer Acrylatpolymere, die Hydroxylgruppen enthalten und eine OH-Zahl von 40 bis 120 aufweisen,
b) 0,1 bis 20 Gew.-% einer oder mehrerer Verbindungen, die i) eine und/oder zwei funktionelle Gruppenverbindungen, die gegenüber Isocyanatgruppen reaktiv sind, und ii) Gruppen, die kationisch und/oder anionisch sind und/oder eine Dispersionswirkung aufgrund des Gehalts von Ethergruppen besitzen, enthalten,
c) 10 bis 50 Gew.-% eines oder mehrerer Di- und/oder Polyisocyanate,
d) 0 bis 30 Gew.-% eines Di- und/oder Polyols mit einem zahlenmittleren Molekulargewicht von bis zu 5000, einer OH-Funktionalität von 1,8 bis 2,2, das keine Gruppen, die kationisch oder anionisch sind, eine unzureichende Menge an Ethergruppen, um eine Dispersionswirkung zu besitzen, und keine ethylenisch ungesättigten Gruppen enthält, und
e) 0,1 bis 10 Gew.-% eines oder mehrerer Di- und/oder Polyamine mit einem zahlenmittleren Molekulargewicht von etwa 31 bis 700,
wobei sich die Gewichtsprozente auf die Gesamtmenge an Komponenten B)a) bis B)e) beziehen und zusammen 100% ergeben,
C) 0,1 bis 10 Gew.-% eines oder mehrerer Photoinitiatoren, wobei sich das Gew.-% von Komponente C) auf das kombinierte Gewicht von Komponenten A) und B) bezieht und wobei die Prozentwerte der Komponenten A) und B) zusammen 100% ergeben, und
D) 20 bis 60 Gew.-% Wasser oder eines Gemischs von Wasser und Lösungsmittel, wobei sich das Gew.-% von Komponente D) auf den gesamten kombinierten Feststoffgehalt der Komponenten A) und B) bezieht.

2. Zusammensetzung nach Anspruch 1, wobei Komponente A) in einer Menge von 10% bis 90 Gew.-%, Komponente B) in einer Menge von 10 bis 90 Gew.-% und Komponente C) in einer Menge von 0,5 bis 6 Gew.-% vorliegt.

3. Zusammensetzung nach Anspruch 2, wobei Komponente A) in einer Menge von 25% bis 75 Gew.-%, Komponente B) in einer Menge von 25 bis 75 Gew.-% und Komponente C) in einer Menge von 1 bis 4 Gew.-% vorliegt.

4. Zusammensetzung nach Anspruch 1, wobei Komponente B) a) in einer Menge von 50 bis 80 Gew.-%, Komponente B)b) in einer Menge von 2 bis 15 Gew.-%, Komponente B)c) in einer Menge von 15 bis 40 Gew.-%, Komponente B)d) in einer Menge von 0 bis 20 Gew.-% und Komponente B)e) in einer Menge von 0,5 bis 7 Gew.-% eingesetzt wird.

5. Zusammensetzung nach Anspruch 1, wobei Komponente A)a) durch Umsetzen von 50 bis 70 Gew.-% Komponente A)a)i), 25 bis 35 Gew.-% Komponente A)a)ii) und 5 bis 15 Gew.-% Komponente A)a)iii) hergestellt wird.

6. Zusammensetzung nach Anspruch 1, wobei Komponente A)c) eine OH-Funktionalität von 1,8 bis 4 und ein zahlenmittleres Molekulargewicht von 800 bis 2500 aufweist.

7. Zusammensetzung nach Anspruch 1, wobei Komponente A)d) ein zahlenmittleres Molekulargewicht von 31 bis 1000 aufweist.

8. Zusammensetzung nach Anspruch 1, wobei Komponente B)a) 0,1 bis 10 Mol/kg C=C-Bindungen, bezogen auf das Gewicht von Komponente B)a), aufweist.

9. Zusammensetzung nach Anspruch 1, wobei Komponente B) einen Feststoffgehalt von 30 bis 55 Gew.-% aufweist.

10. Zusammensetzung nach Anspruch 1, ferner umfassend 0,1 bis 35 Gew.-% eines Materials, das über Carboxylgruppen, Hydroxylgruppen, Aminogruppen oder Feuchtigkeit vernetzt.

11. Verfahren zur Beschichtung eines Substrats, wobei man
i) die Zusammensetzung nach Anspruch 1 auf ein Substrat aufträgt und
ii) das beschichtete Substrat einer Strahlung mit einer Wellenlänge von 300nm oder höher über einen Zeitraum aussetzt, der zur Härtung der Zusammensetzung ausreicht.

12. Verfahren nach Anspruch 11, wobei die Wellenlänge der Strahlung bei 320 bis 450 nm liegt.

13. Produkt, produziert gemäß dem Verfahren nach Anspruch 12.

## Revendications

1. Composition durcissable par un rayonnement ayant une longueur d'onde supérieure ou égale à 300 nm, comprenant :
A) de 1 à 99 % en poids d'une dispersion aqueuse de polyuréthane ayant une teneur en extrait sec de 20 à 50 % en poids et préparée à partir de composants comprenant :
a) de 5 à 50 % en poids d'un polyester préparé à partir de
ai) de 30 à 85 % en poids d'acide gras d'huile de ricin,
aii) de 10 à 60 % en poids d'un ou plusieurs acides carboxyliques ayant de 8 à 30 atomes de carbone et de 0 à 4 doubles liaisons C=C et
aiii) de 3 à 20 % en poids d'un ou plusieurs alcools ayant une fonctionnalité moyenne de 2,5 à 3,5,
les pourcentages des composants A)ai) à A)aiii) totalisant 100 %,
b) de 5 à 60 % d'un ou plusieurs polyisocyanates,
c) de 0,5 à 40 % en poids d'un ou plusieurs polyols polymères non hydrophiles ayant des masses moléculaires moyennes en nombre de 500 à 6 000,
d) de 0 à 10 % en poids d'un monoalcool et/ou d'une monoamine,
e) de 0,5 à 15 % en poids d'une substance ayant une masse moléculaire moyenne en nombre au-dessous de 500 et choisie dans le groupe constitué par les polyols, les aminopolyols et les polyamines et
f) de 0 à 10 % en poids d'un éther de polyoxyalkylène hydrophile non ionique à fonctionnalité OH- et/ou d'un éther de polyoxyalkylène hydrophile non ionique à fonctionnalité NH-, ayant une masse moléculaire moyenne en nombre de 250 à 3 000,
les pourcentages des composants A)a) à A)f) totalisant 100 %,
B) de 1 à 99 % en poids d'une dispersion aqueuse d'uréthane/acrylate de polyester ayant une teneur en extrait sec de 20 à 60 % en poids et préparée par la réaction de
a) de 40 à 90 % en poids d'un ou plusieurs polymères d'acrylate contenant des groupes hydroxyle et ayant un indice d'OH de 40 à 120,
b) de 0,1 à 20 % en poids d'un ou plusieurs composés contenant
i) des composés à un et/ou deux groupes fonctionnels réactifs vis-à-vis des groupes isocyanate et
ii) des groupes qui sont cationiques et/ou anioniques et/ou qui ont un effet dispersant en raison de leur teneur en groupes éther,
c) de 10 à 50 % en poids d'un ou plusieurs diisocyanates et/ou polyisocyanates,
d) de 0 à 30 % en poids d'un diol et/ou polyol ayant une masse moléculaire moyenne en nombre allant jusqu'à 5 000, une fonctionnalité OH de 1,8 à 2,2, ne contenant pas de groupes qui sont cationiques ou anioniques, contenant une quantité insuffisante de groupes éther pour avoir un effet dispersant et ne contenant pas de groupes à insaturation éthylénique et
e) de 0,1 à 10 % en poids d'une ou plusieurs diamines et/ou polyamines ayant une masse moléculaire moyenne en nombre d'environ 31 à 700,
les pourcentages en poids étant basés sur la quantité totale des composants B)a) à B)e) et totalisant 100 %,
C) de 0,1 à 10 % en poids d'un ou plusieurs photoinitiateurs, le % en poids de composant C) étant basé sur le poids combiné des composants A) et B) et les pourcentages des composants A) et B) totalisant 100 %, et
D) de 20 à 60 % en poids d'eau ou d'un mélange d'eau et de solvant, le % en poids de composant D) étant basé sur la teneur en extrait sec totale combinée des composants A) et B).

2. Composition selon la revendication 1, dans laquelle le composant A) est présent en quantité de 10 % à 90 % en poids, le composant B) est présent en une quantité de 10 à 90 % en poids et le composant C) est présent en une quantité de 0,5 à 6 % en poids.

3. Composition selon la revendication 2, dans laquelle le composant A) est présent en quantité de 25 % à 75 % en poids, le composant B) est présent en une quantité de 25 à 75 % en poids et le composant C) est présent en une quantité de 1 à 4 % en poids.

4. Composition selon la revendication 1, dans laquelle le composant B)a) est utilisé en quantité de 50 à 80 % en poids, le composant B)b) est utilisé en quantité de 2 à 15 % en poids, le composant B)c) est utilisé en quantité de 15 à 40 % en poids, le composant B)d) est utilisé en quantité de 0 à 20 % en poids et le composant B)e) est utilisé en quantité de 0,5 à 7 % en poids.

5. Composition selon la revendication 1, dans laquelle le composant A)a) est préparé par la réaction de 50 à 70 % en poids de composant A)a)i), de 25 à 35 % en poids de composant A)a)ii) et de 5 à 15 % en poids de composant A)a)iii).

6. Composition selon la revendication 1, dans laquelle le composant A)c) a une fonctionnalité OH de 1,8 à 4 et une masse moléculaire moyenne en nombre de 800 à 2 500.

7. Composition selon la revendication 1, dans laquelle le composant A)d) a une masse moléculaire moyenne en nombre de 31 à 1 000.

8. Composition selon la revendication 1, dans laquelle le composant B)a) contient de 0,1 à 10 mol/kg, sur la base du poids du composant B)a), de liaisons C=C.

9. Composition selon la revendication 1, dans laquelle le composant B) a une teneur en extrait sec de 30 à 55 % en poids.

10. Composition selon la revendication 1 comprenant en outre de 0,1 à 35 % en poids d'une substance qui réticule par des groupes carboxyle, des groupes hydroxyle, des groupes amino ou l'humidité.

11. Procédé pour le revêtement d'un substrat comprenant
i) l'application de la composition selon la revendication 1 sur un substrat et
ii) l'opération consistant à soumettre le substrat enduit à un rayonnement ayant une longueur d'onde supérieure ou égale à 300 nm pendant un temps suffisant pour faire durcir la composition.

12. Procédé selon la revendication 11, dans lequel la longueur d'onde dudit rayonnement est de 320 à 450 nm.

13. Produit produit selon le procédé selon la revendication 12.
